# EUROPEAN PATENT SPECIFICATION

(11) **EP 1 005 788 B1**
(45) Date of publication and mention of the grant of the patent: **07.03.2007**
(21) Application number: 99204139.2
(22) Date of filing: 03.12.1999
(51) Int. Cl.: A01K 5/02, A23K 1/175

(54) **Method for preparing a nutriment, nutriment, method of dispensing a nutriment**
Verfahren zur Herstellung von Nährstoffen, Nährstoffe und Verfahren zur Abgabe von Nährstoffen
Procédé de préparation de nutriments, nutriments et procédé de distribution de nutriments

(30) Priority: 03.12.1998 NL 1010717
(43) Date of publication of application: 07.06.2000
(73) Proprietor: EPENHUYSEN CHEMIE N.V., NL-3336 LH Zwijndrecht (NL)
(72) Inventor: Van Etten, Jacobus Hendrik, 3328 CN Dordrecht (NL)
(74) Representative: Assendelft, Jacobus H.W.

(56) References cited:
- EP-A- 0 454 221
- EP-A- 0 595 784
- EP-A- 0 659 337
- GB-A- 2 200 695
- US-A- 4 733 971

## Description

The invention is at the field of nutriments, such as food supplements, particularly for cattle, such as horned cattle, among which dairy cows or calves, goats, sheep, lambs, chicken, chicks, pigs among which sows and piglets, horses, rabbits, etc., or different mammals or birds or under water animals such as fish or crustaceans.

EP-A-0 454 221 discloses a method for preparing an aqueous food supplement for cattle and the thus prepared food supplement. Micro and macro elements are dissolved in water in the presence of phosphoric acid until a substantially saturated solution is obtained that can be added to the drinking water of the cattle. EP-A-0 454 221 and EP-B-0 454 221 and the priority application NL-A-9000996 provide a relevant technical background for the present invention and have several objects in common with it and are therefor enclosed in here by reference. WO 81/02242 also provides background.

The object of the invention is conveniently in a predetermined dosing administering a nutriment, such that the nutriment is consumed as equal as possible, when mixed with drinking water without or with minimum formation of precipitates, while it is stable and substantially free of the metabolism unnecessary loading elements, such as unwanted anions like chlorides and sulfates, and made from substances that are little or not water soluble.

The invention is further illustrated by non-limiting embodiments, that also pay attention to other objects and advantages of the invention.

According to an example the aqueous nutriment is from a storage bin administered in a tap water line wherein a pressure head of preferably at least 0.5 bar prevails. This tap water line, that can be situated within a stable, is e.g. connected to the common tap water distribution line, but can also be connected to a local tap water installation that gets the drinking water from a nearby (e.g. at the own site) underground well. From the dispensing point of the nutriment the line extends, possibly through branches, to one or more distant tap or consumption points, where the animals can drink from the drinking water. The metering device is connected to an electronic control unit that takes care of adding a predetermined amount of nutriment per unit of water flowing through the line. Thus it flows with the tap water through the tap water line to the dispensing points, wherein the concentration of the nutriment can be virtually equal and homogeneous at each dispensing point. In this way the required metering equipment can be kept to a minimum, while despite of this an individual administration of the nutriment for a group of animals can be provided since the tap water needs of an individual, particularly of a dairy cow, corresponds to its needs for the nutriment.

Thus the nutriment, preferably mixed with tap water or another liquid, flows over a predetermined distance of e.g. at least two or more meters through a mostly relatively narrow tube to the one or more tap points, such as drinking nipples or drinking bins or feed trough, wherein the thus diluted nutriment can pass one or more valves in the line. The nutriment is continuously for long periods, such as at least a month, preferably at least substantially for the whole year, individually administered in this way. Thus, this nutriment froms an at least almost daily part of the food.

The nutriment contains one or more elements selected from the group comprising Ca, Mg, Zn, Cu, Mn, Na, Co, Se, I.

Elements from the sub group Ca, Mg, Mn, Zn, en Cu, are dissolved in water from a little or not water soluble substance thereof, such as oxides or carbonates, with the aid of organic acid, such that from said nutrients one or more proper water soluble reaction products are provided that do not add the metabolism loading byproducts, such as undesired anions such as chlorides or sulfates. The liquid nutriment is an at least substantially saturated solution.

The administration is such that a strong dilution is provided, at least 100-fold, more preferably an at least 500-fold, moste preferably an at least 1000-fold dilution of the nurtiment.

The inventors have discovered that, with aqueous nutriments on the basis of the above cited patent publications, when administering the nutriment into the tap water line, the yield of the nutriment at the tap point is not equal to the initial (central) administration upstream.

It was surprisingly found out that such a phenomenon is present in an at least generally smaller amount or lacks completely when the method according to the attached claim is carried out.

This can be exemplified as follows:

### Example 1

It was found out that with an at least almost precipitate free almost saturated aqueous food supplement with the following elements: Mg, Mn, Zn, Cu and 300 moles phosphates per 100 kg food supplement and a pH of 2.5 at a dosing rate of 2 gr/l tap water (groundwater, pumped in the neighbourhood of Wolvega, Netherlands, that is used on a daily basis as drinking water for piglets after processing in a common de-ironing device), the mean yield of elements at the tap point, measured during a five times twenty four hours' period, is less than 80%, wherein the tap water flows with a temperature of about 10°C and a pressure of about 2 bar from the administration point of the food supplement over a distance of five meters through a water line, common for a pig farm, before reaching the tap point, while the mean through flow speed measures 1 1/hour, wherein the tap water stands still during 70% of the time, to simulate the drinking behaviour of the pigs. Investigation of the inner wall of the water line between the administering point and the tap point yields that a precipitation has fromed on it, containing magnesium, zinc and copper containing phosphate compounds. The inventors were surprised by this precipitation formation, since it was discovered earlier on that the nutriment can be strongly diluted without precipitation formation.

### Example 2

By repeating the test, but now with limitation of the amount of phosphate in the at least almost precipitation free, almost saturated food supplement to 20 moles, preferably 10 moles per 100 kg food supplement at the most, while replacing the phosphate groups further by organic acid groups, such that the pH measured 6.0 to the most, while keeping the other circumstances unaltered, the yield of the elements at the tap point measured at least almost 100%. The inner wall of the line showed hardly or no precipitation of phosphate compounds.

A nutriment for use with the invention can be prepared as follow:
In demi-water one or more organic acids are mixed with one or more substances to yield one or more dissolved elements, wherein those elements are selected from the group containing at least calcium, phosphorous, magnesium, manganese, zinc, copper, sodium, cobalt, iodine and selene, wherein those substances are selected from the group containing at least oxides, phosphates and carbonates. Said organic acids are selected from the group of hydrogen carbon acid, acetic acid, ethane carbon acid, mixing takes place such that an at least substantially saturated solution is provided.

Thus, an in water dissolved, and thus by the organism good accepted, nutriment can be prepared from substances that are little or not soluble in water.

According to a prefered embodiment the oxides are mixed with water in the precense of acetic acid and/or the carbonates are mixed in the precense of hydrogene carbon acid.

According to another prefered embodiment the elements are dissolved in a mixture of different acids, such that of each elements a concentration can be provided that is as high as possible. In this repsect it is preferable, that the mutual mixing ratio of the acids is selected such that the concentration of all elements in the solution is optimised. E.g. the elements Mg, Zn and/or Mn are dissolved with acetic acid, while Cu and, or, respectively, Mn are dissolved with hydrogene carbon acid. The hydrogene carbon acid and/or acetic acid can be completely or partly replaced by ethane carbon acid.

The nutriment can contain organic and/or anorganic growth stimulating compounds, such as micro elements, e.g. selene, cobalt, iodine and vitamins. Different salts, preferably good soluble in water, can be added to the nutriment, such as MgCl, or NaCl, if desired.

The nutriment can at least substantially prepared into a substantial saturated solution from the following substances, wherein said solution is preferably substantially saturated with said one or more food elements: 0-25 wt% hydrogene carbon acid (98%); 0-35 wt% acetic acid (100%); 0-35 wt% ethane carbon acid (99%); oxides or phosphates or carbonates from one or more food elements from the following group: manganese, magnesium, zinc, copper. In water soluble compounds can be added thereto of one or more elements from the group: sodium, selene, iodine, cobalt; balance water, such that within the nutriment the ratio of the food elements can be as follows:

| | |
|---|---|
| magnesium | 0,1-8 wt % |
| zinc | 0,1-8 wt % |
| manganese | 0,1-8 wt % |
| copper | 0,1-8 wt % |
| sodium | 0,05-3 wt % |
| cobalt | 1-200 ppm |
| selene | 1-200 ppm |
| iodine | 1-400 ppm. |

The chemical compounds, particularly the oxides, phosphates and carbobates, react with the present acid to yield in water soluble salts of said acid. A predetermined amount of free acid is present in the completed nutriment, and said amount varies between 5 and 20 wt%. A part of said free acid is nutralised by adding Na as NaOh. The pH of this nutriment ranges below about 6.0, and is higher than about 3.0 and ranges most preferably between at least about 3.25 and at least about 4.75. Cobalt can be added as cobalt-sulfate. Selene can be added as sodiumselenite. Iodine can be added as sodiumiodate.

It is appreciated that with the little or not in water soluble phosphate compounds, particularly the secundair and tertiair compounds are meant. It is furthermore appreciated that the little or not in water soluble substances are dissolved in the water acidified with one or more of said acids. Pure substances are used as raw materials, with a purity such that they are adapted as animal food or human consumption, such that as little as possible, or at least substantially no, undesired substances are added to the nutriment. Preferably the nutriment is prepared wherein at least one of the added substances, more preferably all those substances, adds two at the most, preferably only one of the desired elements, selected from the group Ca, Mg, Zn, Cu, Mn. In this way a highes possible purity and flexibility of the composition can be provided. The substances can be brought in contact with the dissolving agent simultaneously or subsequently, and this is also possible for some substances simultaneously and some other at a later moment in time.

## Claims

1. A method of administering an aqueous food supplement to cattle in a stable, comprising the steps of:
- preparing an aqueous food supplement for cattle comprising dissolved macro and micro elements, including as desired elements magnesium, zinc, copper, manganese and calcium, wherein water and substances are mixed in the presence of two or more of hydrogen carbon acid (98%), acetic acid (100%), and ethane carbon acid (99%) in a maximum amount of 25 wt%, 35 wt% and 35 wt%, respectively, wherein mixing takes place until an at least substantially saturated solution is obtained and the desired elements are obtained from technically pure nutrient substances, each adding only one or two of the desired elements, which are selected from the group consisting of oxides, phosphates and carbonates that are little or not soluble in water and react with the present acid to yield in water well soluble salts of said acids and the mixing takes place such that in the completed solution: a predetermined amount of free acid is present, ranging between 5 and 20 wt%, the pH ranges between about 3.0 and about 6.0, preferably about 3.25 and about 4.75, and the following ratio of food elements in the solution applies: for each of Mg, Zn, Ca and Mn: 0.1-8 wt%: Na 0.05-3 wt%; Co 1-200 ppm; Se 1-200 ppm; I 1-400 ppm;
- putting the thus obtained aqueous food supplement into a storage bin;
- adding the aqueous food supplement from the storage bin by motoric dispensing means at a central location directly into the drinking water line at a pressure head of at least 0.5 bar of a local tap water installation that gets the drinking water from a nearby underground well at the own site, extending to one or more remote tap points where the cattle can drink, such that a predetermined amount of the supplement per unit of water flowing through the line is added, controlled by an electronic control unit, and the supplement is at least 500 times diluted in the drinking water line,
- such that at the remote tap point(s) the cattle receives all the added supplement with the water it drinks without precipitation formation within the drinking water line due to adding of the supplement.

## Patentansprüche

1. Verfahren zur Verabreiden eines wassrigen Futterzusatses am Vieh in einem Stall, mit folgende schritte:
- herstellen eines wassrigen Futtersuzatses fur Vieh, mit aufgelosten akro- und Mikro-elementen, einschliesslich wie gewunschte Elemente Magnesium, Zink, Kupfer, Mangan und Calcium, wobei Wasser und Substanzen in Gegenwart von zwei oder mehr von Ameisensaure (98%), Essigsaure (100%) und Propionsaure (99%) in eine maximum Menge von 25 gw%, 35 gw% bzw. 35 gw%, wobei das Mischen statt findet bis man eine gesattigte wassrige Losung erhalt und man die gewunschte Elementen erhalt von technisch saubere Futtersubstanzen, jede nur ein oder zwei der gewunschte Elementen beigebend, ausgewahlt aus der Gruppe bestehend aus in Wasser wenig oder nicht auflosende und mit die gegenwartige Saure reagierende Oxiden, Phosphaten und Karbonaten um in Wasser gut auflosbare Salzen dieser Saure zu erhalten und das Mischen statt findet sodass in die vollendet Losung: eine vorbestimmte menge frei Saure zwischen 5 und 20 gw% gegenwartig ist, die pH-wert zwischen ungefehr 3,0 und 6,0, bevorzugt ungefehr 3,25 und ungefehr 4,75 liegt, und folgendes Verhaltnis von Futterelemente in die Losung zutrefft: für jede von Mg, Zn, Cu et Mn : 0, 8-8 pd% ; Na 0.05-3 wt%; Co 1-200 ppm; Se 1-200 ppm; I 1-400 ppm;
- die auf diese Art und Weise bekommen wassrigen Futterzusatses in einem Vorratstank dosieren;
- Verabreiden der Futterzusatses von dem Vorratstank von Motorische Dosiermittel bei eine Zentrale Statte direkt in der Trinkwasserleitung bei eine Druckunterschied von zumindestens 0,5 bar einer lokale Trinkwasserstatte die das Trinkwasser bekommt von eine benachbarte untererdische Bohrung an der eigene Ort, sich erstreckend zu eine oder mehrere abgelegen Zapfpunkte wo das Vieh trinken kann, sodass eine vorabbestimmte Menge des Zusatses nach durch die Leitung fliessende Wassereinheit verabreicht wird, gefuhrt durch eine elektronische Steuerung, und das Zusatses zumindestens 500 Mahl verdunnt wird in der Trinkwasserleitung;
- sodass bei die abgelegenen Zapfpunkten das Vieh alle verabreichte Zusats bekommen mit dem Wasser es trinkt ohne Niederschlagbildung in der Trinkwasserleitung infolge zusetzen des Zusatzes.

## Revendications

1. Procede pour administrer un complement alimentaire aqueux a le betail dans une etable, comprenent les stages suivante :
- preparer d'un complement alimentaire aqueux pour le betail comprenent des macro- et micro-elements dissous, avec quand elements desires du magnesium, du zinc, du cuivre, du manganese et du calcium, dans lequel d'eau et de substances sont melange en presence d'au moins deux de acide fourmi (98%), acide acetique (100%) et acide propion (99%) dans un maximum quantite de 25 pd%, 35 pd% respectivement 35 pd%, dans lequel le melanger est effectuer jusqu'à l'obtention une solution au moins essentiellement saturee et les elements desirer sont obtenu de substances alimentaire technique pur, tout ajouter seulement un ou deux des elements desirer, choisis dans le groupe comprenent des oxides, des phosphates et des carbonates peu ou non soluble dans l'eau et reacter avec l'acide presente pour obtenir dans l'eau des sels des acides bon soluble et le melange a lieu telle que dans la solution complete : une quantite predetermine d'acide libre est presente, comprise entre 5 et 20 pd%, le valeur de pH est comprise entre 3,0 et 6,0, de preference 3,25 et 4,75, et le rapport suivante des elements alimentaire dans la solution est applicable : pour tous de Mg, Zn, Cu et Mn : 0, 8-3 pd% ; Na 0.05-3 wt%; Co 1-200 ppm; Se 1-200 ppm; I 1-400 ppm;
- loger le complément alimentaire obtenu dans une reservoire ;
- doser le complément alimentaire aqueux du reservoir par moyens a doser motorise a une position central immédiatement dans la tube d'eau potable a une différence de pression d'au moins 0,5 bar d'une prise d'eau local qui obtenu l'eau potable d'un puits sous-sol proximale a l'emplacement proprietaire, etendre a une ou plusieurs points de prise loin ou le betail peut buver, telle que une quantite predetermine du completement par unite de l'eau couler dans la tube est dose, controlle par une unite de controlle électronique, et le completement est au moins 500 fois dilue dans la tube de l'eau potable ;
- telle que a le point de prise(s) loin le betail recoit tous le completement dose avec l'eau buve par le betail sans formation de précipitation dans le tube de l'eau potable provoque par dose le completement.
